# EUROPÄISCHE PATENTSCHRIFT

(11) **EP 0 539 551 B1**
(45) Veröffentlichungstag und Bekanntmachung des Hinweises auf die Patenterteilung: **04.10.1995**
(21) Anmeldenummer: 92909824.2
(22) Anmeldetag: 09.05.1992
(51) Int. Cl.: B01D 53/72

(54) **VERFAHREN ZUM ENTSORGEN VON ETHYLENOXID-GAS**
PROCESS FOR THE REMOVAL OF ETHYLENE OXIDE GAS
PROCEDE POUR L'ELIMINATION DU GAZ OXYDE D'ETHYLENE

(30) Priorität: 17.05.1991 DE 4116187
(43) Veröffentlichungstag der Anmeldung: 05.05.1993
(73) Patentinhaber: BENEDIKT- KREUTZ- REHABILITATIONSZENTRUM FÜR HERZ- UND, 79189 Bad Krozingen (DE)
(72) Erfinder: WENZLER, Horst, D-7800 Freiburg-Tiengen (DE)
(74) Vertreter: Goy, Wolfgang, Dipl.-Phys.
(86) Internationale Anmeldenummer: DE9200401
(87) Internationale Veröffentlichungsnummer: WO9220432

(56) Entgegenhaltungen:
- EP-A- 0 125 520
- EP-A- 0 434 955
- DE-A- 2 333 574
- DE-A- 3 835 161
- FR-A- 2 496 485
- US-A- 1 954 395
- US-A- 3 163 494
- US-A- 4 612 026
- CENTRAL PATENTS INDEX, BASIC ABSTRACTS JOURNAL Week 7741, Derwent Publications Ltd., London, GB; AN 77-73238Y
- World Patents Index, Woche 7741, Derwent Publ. Ltd, London (GB) AN 77-73238Y, & JP,A, 52103377 (NIPPON SODA K.K.) 30. August 1977, siehe Zusammenfassung

## Beschreibung

Die Erfindung betrifft ein Verfahren zum Entsorgen von in einem Gas, insbesondere Luft, in einer hohen Konzentration von mehr als 1.000 ppm enthaltenem Ethylenoxid-Gas, beispielsweise bei der Gassterilisation in Sterilisationskammern anfallendem Ethylenoxid-Gas.

Ethylenoxid zeichnet sich durch seine guten mikrobioziden Eigenschatten aus. Aufgrund dieser bakteriziden Wirkung wird daher Ethylenoxid sehr gerne als Sterilisationsgas zum Sterilisieren von vorzugsweise thermolabilen Gegenständen, beispielsweise von Herzkathetern und anderen medizinischen Instrumenten und Hilfsmitteln in Kliniken verwendet. Zu diesem Zweck sind spezielle Sterilisationskammern für die Gassterilisation vorgesehen, in die die zu sterilisierenden Gegenstände gegeben werden. In Abhängigkeit von dem jeweils verwendeten Gas-Sterilisationsverfahren (Unterdruck-, Gleichdruck- oder Überdruckverfahren) wird das Ethylenoxid zur Durchführung der Sterilisation in die Sterilisationskammer eingegeben. Nach erfolgter Sterilisation wird dann die Sterilisationskammer von dem Ethylenoxid-Gas entsorgt, indem beispielsweise das Ethylenoxid-Gas über entsprechende Leitungen direkt ins Freie an die Umwelt abgegeben wird.

Das Ethylenoxid ist zwar bestens dafür geeignet, beispielsweise hitzeempfindliche Instrumente oder Materialien zu entkeimen, ohne diese Materialien zu schädigen, doch hat das Ethylenoxid auch entscheidende Nachteile, die es zum Problemstoff machen. So ist Ethylenoxid im Bereich von 2,7 bis 100 Vol.-% in Luft stark explosiv. Bei niedrigen Temperaturen gefriert es und muß aufgetaut werden. Vor allem aber ist Ethylenoxid toxisch und insbesondere krebserregend. Wenn somit das Ethylenoxid zur Entsorgung bislang direkt an die Umwelt abgegeben wird, besteht je nach Klima und Wetterlage eine unter Umständen erhebliche gesundheitliche Gefährdung für Personen, die sich im Umgebungsbereich der Abgabestellen aufhalten. Aus diesem Grunde darf gemäß der aktuellen gesetzlichen Bestimmungen bei der Emission von Ethylenoxid bei einem Massenstrom von 25 g/h oder mehr die Massenkonzentration im Abgas 5 mg/m³ (entsprechend 2,8 ppm) nicht überschreiten.

Das besondere Anwendungsgebiet des erfindungsgemäßen Verfahrens ist somit die Entsorgung des bei der Gassterilisation in Sterilisationskammern anfallenden Ethylenoxid-Gases mit den dabei auftretenden besonders hohen Massenkonzentrationen dieses Ethylenoxid-Gases. Die Massenkonzentration an Ethylenoxid-Gas bei einer bekannten Sterilisationskammer beträgt dabei ungefähr 1.500.000 mg/m³, was ungefähr 845.000 ppm entspricht. Eine neuere Version derartiger Sterilisationskammern weist eine Ethylenoxid-Gas-Konzentration von ungefähr 680.000 ppm auf. Diese hohen Massenkonzentrationen von Ethylenoxid-Gas stellen den bevorzugten Anwendungsbereich des erfindungsgemäßen Entsorgungsverfahrens dar. Nichtsdestoweniger erstreckt sich das erfindungsgemäße Entsorgungsverfahren gleichermaßen auch auf Ethylenoxid-Gas-Konzentrationen von mehr als 1.000.000 ppm, aber auch auf Konzentrationen zwischen 1.000 ppm und 100.000 ppm. Das besondere Anwendungsgebiet der Erfindung dürfte jedoch im Konzentrationsbereich zwischen 100.000 ppm und 1.000.000 ppm liegen, also in dem Bereich, wo die Gassterilisation im allgemeinen durchgeführt wird.

In der DE-A-23 33 574 ist ein Verfahren der eingangs angegebenen Art zum Entfernen von Abgas aus einem Sterilisiergerät offenbart, welches mit Ethylenoxid-Gas arbeitet. Zu diesem Zweck sieht das bekannte Verfahren vor, das Ethylenoxid-Gas durch ein Bett aus einem Ionenaustauscherharz zu leiten, welches sich innerhalb eines Rohres befindet. Das Harz in dem Bett wird dabei durch Wasserzugabe naß gehalten. Das Ionenaustauscherharz ist stark säurekationaktiv und liegt in der Wasserstofform vor. Es handelt sich bei diesen Ionenaustauscherharzen konkret um synthetische Kunststoffharze, die Sulfonsäuregruppen in der Polymermatrix enthalten. Wenn das Ethylenoxid mit dem nassen Ionenaustauscherharz in dem Bett in Berührung kommt, öffnet sich dabei der Epoxidring, das Ethylenoxid reagiert mit dem Harz und wird an diesem als Hydroxyäthylgruppe gebunden, wobei das hinzugefügte Wasser das Harz überzieht und als Lösungsmittelphase wirkt, in der die Reaktion durchgeführt wird. Eine Regeneration von verbrauchtem Ionenaustauscherharz sieht außer dem Austausch dieses Ionenaustauscherharzes durch neues Harz in alternativer Weise vor, eine Regeneration des Harzes durch den Durchtritt einer wässrigen Lösung einer starken Säure durchzuführen.

In der US-A-3 163 494 ist ein Verfahren zum Entsorgen von Ethylenoxid-Gas offenbart, wie es bei der Gassterilisation in kleinen Sterilisationskammern anfällt. Das Entsorgungsverfahren sieht dabei vor, daß das Ethylenoxid-Gas nach Verlassen der Sterilisationskammer einem Adsorbent in Form von trockener Aktivkohle zugeführt wird, welche sich in einem entsprechenden Behälter (Kartusche) befindet. An dieser trockenen Aktivkohle findet eine Adsorption des Ethylenoxid-Gases statt. Die Entsorgung des adsorbierten Ethylenoxid-Gases erfolgt dadurch, daß die beladene Aktivkohle mit ihrem Behälter (Kartusche) aus dem Sterilisatoroberteil herausgenommen und anschließend durch Zerstörung/Wegwerfen entsorgt und/oder das adsorbierte Ethylenoxid-Gas durch Desorption langsam in die Atmosphäre abgegeben wird. Dieses Entsorgungsverfahren des adsorbierten Ethylenoxid-Gases bzw. der beladenen Aktivkohle ist jedoch in nachteiliger Weise nicht umweltgerecht, sondern umweltschädigend. Eine Regeneration der Aktivkohle ist bei diesem trockenen Adsorptionsverfahren nicht vorgesehen.

Der Erfindung liegt die **Aufgabe** zugrunde, ein einfaches Verfahren zum Entsorgen von in hohen Konzentrationen anfallendem Ethylenoxid-Gas zu schaffen, beispielsweise einsetzbar bei der Gassterilisation in Sterilisationskammern.

Als technische **Lösung** wird mit der Erfindung vorgeschlagen,
a) daß das Ethylenoxid-Gas durch Aktivkohle oder ein gleichwirkendes Material im durch Wasser nassen Zustand unter Anwesenheit einer Säure geleitet und partiell zu Ethylenglykol umgesetzt wird,
b) daß nach Beendigung der Zuleitung des Ethylenoxid-Gases anschließend die Aktivkohle oder das gleichwirkende Material mit Wasser unter Anwesenheit der Säure gespült und dabei der noch nicht vollständig umgesetzte Rest an Ethylenoxid der Stufe a) zu Ethylenglykol umgesetzt wird und
c) daß die Schritte a) und b) bedarfsweise wiederholt werden.

Ein nach dieser technischen Lehre ausgebildetes Abscheideverfahren für Ethylenoxid-Gas, insbesondere für Ethylenoxid-Gas mit besonders hohen Massenkonzentrationen von bis zu 1.000.000 ppm, wie sie beispielsweise bei der Gassterilisation in Sterilisationskammern auftreten, hat den Vorteil, daß damit auf physikalisch-chemisch-technisch einfache und wirtschaftliche Weise eine Entsorgung des Ethylenoxid-Gases mit einer optimalen Konzentrationsreduzierung des in dem Abgas enthaltenen Ethylenoxid möglich ist. Die Konzentrationsreduzierung ist dabei derart, daß diese bei der Entsorgung von Ethylenoxid-Gas aus Sterilisationskammern unterhalb der Nachweisgrenze liegt. Im Sinne der erfindungsgemäßen Verfahrensdurchführung findet eine kombinierte Physio-Sorption, Chemo-Sorption sowie naßkatalytische Umsetzung insofern statt, daß ein Teil der Ethylenoxid-Moleküle an der Aktivkohle (oder einem gleichwirkenden Material) adsorbiert, ein Teil absorbiert sowie schließlich ein Teil der Ethylenoxid-Moleküle naß- bzw. säure-katalytisch zu Ethylenglykol umgesetzt wird, wobei die Aktivkohle gleichzeitig als Adsorbens, Absorbens sowie als Katalysatorträger wirkt. Bei der Physio-Sorption findet eine Adsorption statt, d. h. die zu adsorbierenden Ethylenoxid-Moleküle haften an der großen spezifischen Oberfläche des Adsorbens in Form der Aktivkohle (oder einem gleichwirkenden Material) mittels einer physikalischen Bindung. Bei der Chemo-Sorption findet eine naß- bzw. säure-katalytische Umsetzung und/oder Absorption statt, d. h. die Aktivkohle befindet sich unter Anwesenheit des Säure-Katalysators im nassen Zustand, so daß das Ethylenoxid eine chemische Umwandlung in eine chemischbiologisch unbedenkliche Ethylenglykolverbindung erfährt und auf diese Weise abgeschieden wird. Dabei wird zusätzlich eine selbstkatalytische Wirkung erzielt, indem das entstehende Ethylenglykol selbst zum Katalysator wird und die entsprechende chemische Reaktion positiv unterstützt. Endziel des erfindungsgemäßen Entsorgunsverfahrens ist die chemische Umsetzung des Ethylenoxid zu Ethylenglykol. Im Verfahrensschritt a) erfolgt diese Umsetzung nur für einen Teil des Ethylenoxid. Zur vollständigen Umsetzung wird gemäß dem Verfahrensschritt b) eine Regeneration der Aktivkohle dahingehend durchgeführt, daß sie unter Anwesenheit eines Katalysators in Form einer Säure mit Wasser gespült und dabei das restliche Ethylenoxid, welches an der Aktivkohle adsorbiert worden ist, zu Ethylenglykol umgesetzt wird.

Vorzugsweise besteht dabei die Aktivkohle aus zylindrisch geformten Pellets. Dabei liegt vorzugsweise der Durchmesser der Pellets bei 3 bis 5 mm, vorzugsweise im Mittel bei ungefähr 4 mm, und die Länge der Pellets bei 4 bis 13 mm.

Die spezifische Oberfläche der Aktivkohle liegt vorzugsweise bei 1.000 bis 1.500 m²/g, vorzugsweise im Mittel bei ungefähr 1.300 m²/g.

Die Rütteldichte der Aktivkohle liegt vorzugsweise bei 300 bis 400 kg/m³, vorzugsweise im Mittel bei ungefähr 350 kg/m³.

Der Wassergehalt der Aktivkohle im Ursprungszustand liegt vorzugsweise bei weniger als 5 Gew.-%

Der Aschegehalt der Aktivkohle liegt vorzugsweise bei weniger als 8 Gew.-%.

Eine weitere bevorzugte Weiterbildung schlägt vor, daß die Regeneration nach jeder Chargenbeladung durchgeführt wird. Somit wird die Möglichkeit der ständigen Wiederverwendbarkeit des Adsorbens, Absorbens bzw. des Katalysatorträgers geschaffen und insbesondere eine Konzentrationsanreicherung des Adsorbens, Absorbens bzw. des Katalysatorträgers mit dem problematischen Ethylenoxid vermieden.

Als Säure wird vorzugsweise Schwefelsäure verwendet. Die Säure-Konzentration beträgt dabei vorzugsweise 0,1 bis 5%, vorzugsweise 1 bis 2%.

Ein Ausführungsbeispiel einer erfindungsgemäßen Anlage zum Entsorgen von insbesondere bei der Gassterilisation in Sterilisationskammern anfallendem Ethylenoxid-Gas mit besonders hohen Massenkonzentrationen von bis zu ungefähr 1.500.000 mg/m³ wird nachfolgend anhand einer schematischen Darstellung beschrieben.

Das Kernstück der Anlage besteht aus zwei Behältern 1 in Form von senkrecht stehenden Rohren, wobei unten jeweils der Einlaß 2 und oben jeweils der Auslaß 3 ist. Innerhalb der beIden Behälter 1 befindet sich jeweils eine spezielle Aktivkohle 4. Damit diese nicht nach unten in den jeweiligen Einlaß 2 und nicht nach oben in den Auslaß 3 gelangen kann, ist im Bodenbereich sowie im Deckenbereich der rohrförmigen Behälter 1 jeweils ein Siebeinsatz 5 angeordnet.

Die beiden Behälter 1 sind an ein Abgasleitungssystem angeschlossen. So ist zunächst eine Zuführungsleitung 6 vorgesehen, die beispielsweise an eine (nicht dargestellte) Sterilisationskammer zum Sterilisieren von Gegenständen angeschlossen ist. In dieser Sterilisationskammer wird als Sterilisationsgas Ethylenoxid verwendet, welches nach erfolgter Sterilisation entsorgt werden muß. Zu diesem Zweck wird das Ethylenoxid-Abgas in die Zuführungsleitung 6 geleitet, die über eine Abzweigung 7 in den beiden Einlässen 2 der beiden Behälter 1 mündet. Diesen beiden Einlässen 2 sind jeweils ein Absperrventil 8 sowie ein Magnetventil 9 zugeordnet, so daß die Zuführungsleitung 6 zu dem jeweiligen Behälter 1 geöffnet oder geschlossen werden kann. In die Zuführungsleitung 6 ist vor der Abzweigung 7 ein Druckmanometer 10 (0 bis 10 bar), ein Sicherheitsventil 11, ein Kondensatsammelgefäß 12 sowie ein Rückschlagventil 13 geschaltet. Vor dem Rückschlagventil 13 geht von der Zuführungsleitung 6 noch eine Bypaß-/Abgas-Leitung 14 ab, in das ein Absperrventil 15 geschaltet ist, welches im Normalzustand geschlossen ist.

Auslaßseitig weist die Anlage eine Abführungsleitung 16 auf, in der die beiden Auslässe 3 der beiden Behälter 1 münden, welche ebenso wie die beiden Einlässe 2 mit jeweils einem Absperrventil 17 und einem Magnetventil 18 versehen sind, mittels denen jeweils die Abführungsleitung 16 unterbrochen und der jeweilige Behälter 1, beispielsweise zur Durchführung einer Regeneration, entnommen bzw. umgestellt werden kann. Die Abführungsleitung 16 der beiden Auslässe 3 mündet in der Bypaß-/Abgas-Leitung 14.

Weiterhin sind die beiden Behälter 1 an eine Wasser-/Katalysator- bzw. Wasser-/Oxidations- oder Reduktionsmittel-Spüleinrichtung angeschlossen. Diese besteht zunächst aus einer zentralen Versorgungseinheit 19. Diese weist entsprechende Zuführungen für Schwefelsäure oder Wasserstoffperoxid sowie Wasser auf. Weiterhin ist ein Ablauf 20 sowie eine Entlüftung mit Aktivkohlevorlage 21 vorgesehen. Mittels dieser Versorgungseinheit 19 wird Wasser unter Zugabe eines Katalysators in Form der Schwefelsäure oder unter Zugabe eines Oxidations- oder Reduktionsmittels, z.B. von Wasserstoffperoxid, durch je einen der beiden Behälter 1 in Umlauf gebracht. Die Wasser-/Katalysator- bzw. Wasser-/Oxidations- oder Reduktionsmittel-Zuführungsleitung 22 weist dabei zunächst ein Absperrventil 23, eine Pumpe 24, ein Magnetventil 25 sowie vor den beiden Einlässen 2 nach einer entsprechenden Verzweigung jeweils einen Durchflußmesser 26 auf. Ablaßseitig gehen von den Abführungsleitungen 16 jeweils eine Wasser-/Katalysator- bzw. Wasser-/Oxidations- oder Reduktionsmittel-Rückführungsleitung 27 ab, die in der zentralen Versorgungseinheit 19 mündet. Für die entsprechende Verfahrenssteuerung sind selbstverständlich Ventile 28, 29, 30 in die Leitungen geschaltet.

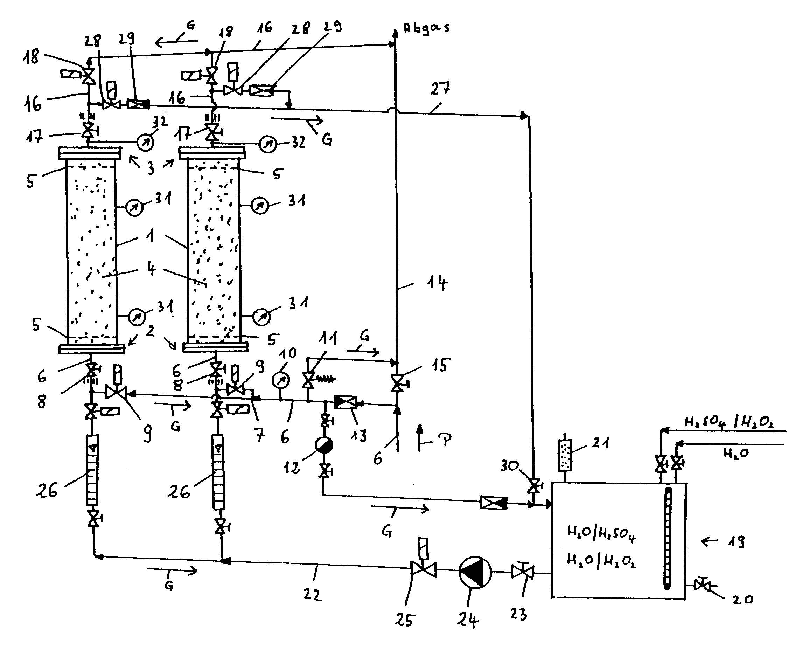

Wie in der Zeichnung erkennbar ist, weisen sämtliche Leitungen ein Gefälle G von 2 bis 3 % auf, und zwar derart, daß das Gefälle letztendlich in Richtung der Zuführungsleitung 6 bzw. dem Kondensatsammelgefäß 12 verläuft,

Die Ethylenoxid-Gas-Abscheideanlage funktioniert wie folgt:
Es soll dabei zunächst davon ausgegangen werden, daß es sich um eine Erstbeschickung der Anlage handelt, daß zuvor also noch kein Ethylenoxid-Gas eingeleitet worden ist.

Das zu entsorgende Ethylenoxid-Abgas wird in Richtung des Pfeiles P der Anlage zugeführt. Da Absperrventil 15 in der Bypaß-/Abgas-Leitung 14 ist dabei geschlossen, so daß das Ethylenoxid-Abgas dem einen der beiden Behälter 1 zugeführt wird, und zwar dort, wo die entsprechenden Absperrund Magnetventile 8, 9 geöffnet sind, während beim anderen Behälter 1 die vorgenannten Ventile geschlossen sind. Entsprechend sind beim jeweils in Betrieb befindlichen Behälter 1 die entsprechenden Absperr- und Magnetventile 17, 18 in der Abführungsleitung 16 geöffnet, so daß das Ethylenoxid-Abgas durch die Aktivkohle 4 in dem jeweiligen Behälter 1 hindurchströmen kann. Die Kontrolle innerhalb des jeweiligen Behälters 1 erfolgt mittels zweier Temperaturfühler 31, die jeweils übereinander an dem jeweiligen rohrförmigen Behälter 1 angeordnet und für eine Maximaltemperatur von 500°C ausgelegt sind. Weiterhin ist ein Kohlenmonoxidmesser 32 vorgesehen.

Sollte der jeweils betriebene Behälter 1 vollständig beladen sein, werden die Absperrventile 8, 9, 17, 18 geschlossen, während sie am anderen Behälter 1 geöffnet werden, so daß dadurch der andere Behälter 1 für die Entsorgung des Ethylenoxid-Abgases sorgt.

Sollte sich innerhalb der Behälter 1 ein Überdruck von mehr als 3 bar bilden, tritt das Sicherheitsventil 11 als Überdruckventil in Aktion und der Ethylenoxid-Überdruck wird über die entsprechende Leitung und anschließend über die Bypaß-/Abgas-Leitung 14 abgeführt. Bei einem Defekt in den Behältern 1 ist es auch möglich, diese durch Öffnen des Absperrventils 15 zu umgehen und die Ethylenoxid-Abgase über die Bypaß-/Abgas-Leitung 14 direkt, beispielsweise in die Umwelt, zu entsorgen. Das verfahrensbedingt mehr oder weniger anfallende Kondenswasser wird im Kondensatsammelgefäß 12 gesammelt und bedarfsweise beim Stillstand der Sterilisationsanlage in die zentrale Versorgungseinheit 19 entsorgt.

Bei der naß-katalytischen Umsetzung und/oder Absorption wird nachdem durch den jeweils in Betrieb befindlichen Behälter 1 eine Charge von Ethylenoxid-Abgas nach einer erfolgten Sterilisation hindurchgeleitet worden ist, gleich anschließend eine Regeneration durchgeführt. Zu diesem Zweck wird durch den Behälter 1 mittels der Versorgungseinheit 19 Wasser unter Zugabe des zuvor beschriebenen Katalysators hindurchgepumpt, nachdem die entsprechenden Ventile geöffnet bzw. geschlossen worden sind. Durch das Hindurchpumpen kommen die Ethylenoxid-Moleküle mit dem Wasser-/Katalysator-Gemisch in Kontakt, und es findet eine chemische Umsetzung in Form einer Chemo-Sorption und/oder Absorption statt, bei der eine Ethylenglykol-Lösung entsteht, weiche chemisch-biologisch ungefährlich ist. Diese wird der Versorgungseinheit 19 zugeführt Nachdem die Aktivkohle 4 in dem jeweiligen Behälter 1 auf diese Weise regeneriert worden ist, läßt man das Wasser-/Katalysator-Gemisch ablaufen, so daß sich der jeweilige Behälter 1 entleert. Im Anschluß daran wird die Aktivkohle 4 im nassen Zustand belassen. In diesem nassen Zustand der Aktivkohle 4 erfolgt dann für die nächste Charge ein erneutes Durchleiten von Ethylenoxid-Abgas aus der Sterilisationskammer. Aufgrund des nassen Zustandes der Aktivkohle 4 findet dabei eine kombinierte Abscheidung der Ethylenoxid-Moleküle teilweise in Form von Chemo-Sorption und/oder Absorption und teilweise in Form von Physio-Sorption, d.h. Adsorption statt. Es ist sogar denkbar, daß gleich eine vollständige Abscheidung in Form von Chemo-Sorption und/oder Absorption stattfindet Somit wird bei der Chemo-Sorption und/oder Absorption bereits teilweise oder sogar bereits vollständig eine Umwandlung des Ethylenoxid in Ethylenglykol durchgeführt Bei dem Rest an Ethylenoxid, bei dem noch keine Umwandlung infolge der Chemo-Sorption und/oder Absorption und stattdessen eine Adsorption an der Aktivkohle 4 stattgefunden hat, wird bei der anschließenden Regeneration mittels der Wasser-/Katalysator-Spülung die chemische Umsetzung in Ethylenglykol durchgeführt. Somit wird nach jeder Chargenbeladung eine Regeneration durch eine Wasser-/Katalysator-Spülung und damit eine Entsorgung des Ethylenoxid im Behälter 1 durchgeführt. Damit wird insbesondere eine Konzentrationsanreicherung des Adsorbens/Absorbens mit dem problematischen Ethylenoxid vermieden und eine sichere Betriebs- und Verfahrensweise gewährleistet.

### Bezugszeichenliste

- 1: Behälter
- 2: Einlaß
- 3: Auslaß
- 4: Aktivkohle
- 5: Siebeinsatz
- 6: Zuführungsleitung
- 7: Abzweigung
- 8: Absperrventil
- 9: Magnetventil
- 10: Druckmanometer
- 11: Sicherheitsventil
- 12: Kondensatsammelgefäß
- 13: Rückschlagventil
- 14: Bypaß-/Abgas-Leitung
- 15: Absperrventil
- 16: Abführungsleitung
- 17: Absperrventil
- 18: Magnetventil
- 19: Versorgungseinheit
- 20: Ablauf
- 21: Entlüftung mit Aktivkohlevorlage
- 22: Wasser-/Katalysator- bzw. Wasser-/Oxidations- oder Reduktionsmittel-Zufuhrungsleitung
- 23: Absperrventil
- 24: Pumpe
- 25: Magnetventil
- 26: Durchflußmesser
- 27: Wasser-/Katalysator- bzw. Wasser-/Oxidations- oder Reduktionsmittel-Rückführungsleitung
- 28: Magnetventil
- 29: Rückschlagventil
- 30: Absperrventil
- 31: Terperaturfühler
- 32: Kohlenmonoxidmesser
- G: Gefälle
- P: Pfeil

## Patentansprüche

1. Verfahren zum Entsorgen von in einem Gas, insbesondere Luft, in einer hohen Konzentration von mehr als 1.000 ppm enthaltenem Ethylenoxid-Gas, beispielsweise bei der Gassterilisation in Sterilisationskammern anfallendem Ethylenoxid-Gas,
**dadurch gekennzeichnet**,
a) daß das Ethylenoxid-Gas durch Aktivkohle oder ein gleichwirkendes Material im durch Wasser nassen Zustand unter Anwesenheit einer Säure geleitet und partiell zu Ethylenglykol umgesetzt wird,
b) daß nach Beendigung der Zuleitung des Ethylenoxid-Gases anschließend die Aktivkohle oder das gleichwirkende Material mit Wasser unter Anwesenheit der Säure gespült und dabei der noch nicht vollständig umgesetzte Rest an Ethylenoxid der Stufe a) zu Ethylenglykol umgesetzt wird und
c) daß die Schritte a) und b) bedarfsweise wiederholt werden.

2. Verfahren nach Anspruch 1, dadurch gekennzeichnet, daß die Aktivkohle aus zylindrisch geformten Pellets besteht.

3. Verfahren nach Anspruch 2, dadurch gekennzeichnet, daß der Durchmesser der Pellets bei 3 bis 5 mm, vorzugsweise im Mittel bei ungefähr 4 mm, und die Länge der Pellets bei 4 bis 13 mm liegt.

4. Verfahren nach einem der Ansprüche 1 bis 3, dadurch gekennzeichnet, daß die spezifische Oberfläche der Aktivkohle bei 1.000 bis 1.500 m²/g, vorzugsweise im Mittel bei ungefähr 1.300 m²/g, liegt.

5. Verfahren nach einem der Ansprüche 1 bis 4, dadurch gekennzeichnet, daß die Rütteldichte der Aktivkohle bei 300 bis 400 kg/m³, vorzugsweise im Mittel bei ungefähr 350 kg/m³, liegt.

6. Verfahren nach einem der Ansprüche 1 bis 5, dadurch gekennzeichnet, daß der Wassergehalt der Aktivkohle im Ursprungszustand bei weniger als 5 Gew.-% liegt.

7. Verfahren nach einem der Ansprüche 1 bis 6, dadurch gekennzeichnet, daß der Aschegehalt der Aktivkohle bei weniger als 8 Gew.-% liegt.

8. Verfahren nach einem der Ansprüche 1 bis 7, dadurch gekennzeichnet, daß die Regeneration nach jeder Chargenbeladung durchgeführt wird.

9. Verfahren nach einem der Ansprüche 1 bis 8, dadurch gekennzeichnet, daß als Säure Schwefelsäure verwendet wird.

10. Verfahren nach einem der Ansprüche 1 bis 10, dadurch gekennzeichnet, daß die Säure-Konzentration 0,1 bis 5%, vorzugsweise 1 bis 2% beträgt.

## Claims

1. Process for removal of ethylene oxide gas from a carrier gas, in particular air, in a high concentration of over 1,000 ppm, for example ethylene oxide gas occurring in sterilization chambers during gas sterilization,
characterised in that
a) the ethylene oxide carrying gas is passed through active charcoal or a material of equivalent effect in a water-wetted state in the presence of an acid and partially converted into ethylene glycol,
b) after completion of the passage of the ethylene oxide carrying gas, the active charcoal or material of equivalent effect is then rinsed with water in the presence of the acid, and the residue of ethylene oxide of stage a) not yet fully converted is converted into ethylene glycol, and
c) steps a) and b) are repeated as required.

2. Process according to claim 1, characterized in that the active charcoal consists of cylindrically shaped pellets.

3. Process according to claim 2, characterized in that the diameter of the pellets is 3 to 5 mm, preferably on average approximately 4 mm, and the length of the pellets is 4 to 13 mm.

4. Process according to any of claims 1 to 3, characterised in that the specific surface of the active charcoal is 1000 to 1500 m²/g, preferably on average approximately 1300 m²/g.

5. Process according to any of claims 1 to 4, characterized in that the compacted apparent density of the active charcoal is 300 to 400 kg/m³, preferably on average approximately 350 kg/m³.

6. Process according to any of claims 1 to 5, characterised in that the water content of the active charcoal in the original state is less than 5 w.%.

7. Process according to any of claims 1 to 6, characterised in that the ash content of the active charcoal is less than 8 w.%.

8. Process according to any of claims 1 to 7, characterised in that the regeneration is carried out after each batch charge.

9. Process according to any of claims 1 to 8, characterised in that sulphuric acid is used as the acid.

10. Process according to any of claims 1 to 9, characterised in that the acid concentration is 0.1 to 5%, preferably 1 to 2%.

## Revendications

1. Procédé pour l'élimination du gaz oxyde d'éthylène contenu dans un gaz, en particulier dans l'air, dans une forte concentration de plus de 1.000 ppm, par exemple du gaz oxyde d'éthylène produit lors de la stérilisation à gaz dans des chambres de stérilisation, **caractérisé en ce** que
a) le gaz oxyde d'éthylène traverse du charbon actif ou un matériau ayant le même effet à l'état mouillé par l'eau et en présence d'un acide, et est partiellement transformé en éthylène glycol.
b) que, après la fin de l'amenée du gaz oxyde d'éthylène, le charbon actif ou le matériau ayant le même effet est rincé à l'eau en présence de l'acide le reste d'oxyde d'éthylène de l'étape a) pas encore entièrement transformé étant alors transformé en éthylène glycol, et
c) que les étapes a) et b) sont répétées en cas de besoin.

2. Procédé selon la revendication 1, caractérisé en ce que le charbon actif est constitué par des boulettes de forme cylindrique.

3. Procédé selon la revendication 2, caractérisé en ce que le diamètre des boulettes est de 3 à 5 mm, de préférence d'environ 4 mm en moyenne, et que la longueur des boulettes est comprise entre 4 et 13 mm.

4. Procédé selon l'une des revendications 1 à 3, caractérisé en ce que la surface spécifique du charbon actif est comprise entre 1.000 et 1.500 m²/g, et se situe de préférence en moyenne à environ 1.300 m²/g.

5. Procédé selon l'une des revendications 1 à 4, caractérisé en ce que la masse volumique apparente après tassement du charbon actif est de 300 à 400 kg/m³, et se situe de préférence en moyenne à environ 350 kg/m³.

6. Procédé selon l'une des revendications 1 à 5, caractérisé en ce que la teneur en eau du charbon actif à l'état initial est inférieure à 5 % en poids.

7. Procédé selon l'une des revendications 1 à 6, caractérisé en ce que la teneur en cendres du charbon actif est inférieure à 8 % en poids.

8. Procédé selon l'une des revendications 1 à 7, caractérisé en ce que la régénération est effectuée après chaque charge.

9. Procédé selon l'une des revendications 1 à 8, caractérisé en ce qu'il utilise comme acide l'acide sulfurique.

10. Procédé selon l'une des revendications 1 à 10, caractérisé en ce que la concentration d'acide est de 0,1 à 5 %, de préférence de 1 à 2 %.
